# EUROPEAN PATENT APPLICATION

(11) **EP 4 039 764 A1**
(43) Date of publication of application: **10.08.2022**
(21) Application number: 20872688.5
(22) Date of filing: 22.09.2020
(51) Int. Cl.: C09J 183/06, C08L 33/04, C09J 4/06, C03C 27/04

(54) **PRIMER COMPOSITION FOR GLASS ADHESIVE**

(30) Priority: 02.10.2019 KR 20190122359
(71) Applicant: KCC Corporation, Seoul 06608 (KR)
(72) Inventor: LEE, Jeong Hyun, Ulsan 44262 (KR)
(74) Representative: Newcombe, Christopher David
(86) International application number: PCT/KR2020/012745
(87) International publication number: WO 2021/066369

(57) **Abstract**

The present invention relates to a primer composition for a glass adhesive, the composition comprising a silane polymer, an acrylic polymer, a silane monomer, and a curing catalyst. The composition comprises 15 to 70 parts by weight of a silane polymer, 1 to 50 parts by weight of an acrylic polymer, 0.1 to 20 parts by weight of a silane monomer, and 0.001 to 5 parts by weight of a curing catalyst.

## Description

### TECHNICAL FIELD

The present invention relates to a primer composition for a glass adhesive, which is capable of securing a pot time and has excellent workability and excellent glass adhesiveness.

### BACKGROUND ART

If glass is attached to a painted surface of a car body, in order to prevent the slipping or detachment of the glass from the painted surface due to insufficient adhesiveness between the painted surface and the glass, generally, a primer is painted first on the painted surface, and a moisture curing type adhesive is used on the primer. In this case, the moisture curing type adhesive generally includes a urethane resin which is a reaction product of an isocyanate and a polyol, as a resin component, includes carbon black, calcium carbonate, or the like, as a pigment component, and includes a plasticizer such as diisononyl phthalate (DINP). In addition, the conventional primer composition includes a film-forming agent such as an epoxy resin, a silane polymer, an acrylic resin, or the like; and additives including a pigment such as carbon black, an inorganic filler (for example, titanium oxide, calcium carbonate and anhydrous silicate), or the like.

However, the conventional primer composition had problems in the shortage of storability due to the additives such as the pigment and the inorganic filler, and the shortage of storage stability due to the precipitation of the inorganic filler, or the like. In order to solve such problems, the conventional primer composition generally included a dispersant. However, the conventional primer composition including the dispersant and the pigment or inorganic filler, required an additional dispersion process to degrade economic feasibility, and there are limits to induce problems on storability and precipitation due to the pigment or inorganic filler.

As an alternative thereto, Korean Laid-open Patent Publication No. 2017-0016433 (Patent Document 1) discloses a primer composition including an acrylic copolymer, a titanium compound and a solvent. However, the composition of Patent Document 1 showed inferior adhesiveness due to the shortage of wettability with the ceramic coated surface of car glass, and defects of inferior water resistance and chemical resistance due to a monosilane and a titanium compound.

Accordingly, research on a primer composition for a glass adhesive, which does not include a pigment such as carbon black and an inorganic filler, thereby omitting a dispersion process, does not include a dispersant, thereby showing excellent economic feasibility, does not induce the precipitation of a pigment and an inorganic filler, thereby achieving excellent storage stability, is capable of securing a pot time, thereby achieving excellent workability, and has excellent adhesiveness with glass, is required.

### DISCLOSURE OF THE INVENTION

### TECHNICAL PROBLEM

Accordingly, the present invention is to provide a primer composition for a glass adhesive, which does not include a pigment such as carbon black and an inorganic filler, thereby showing excellent storage stability (not inducing precipitation), not including a separate dispersant, and omitting a dispersion process, and shows excellent economic feasibility, and further, is capable of securing a pot time and showing excellent workability and excellent adhesiveness with glass.

### TECHNICAL SOLUTION

The present invention provides a primer composition for a glass adhesive, comprising a silane polymer, an acrylic polymer, a silane monomer and a curing catalyst,
wherein the composition comprises 15 to 70 parts by weight of the silane polymer, 1 to 50 parts by weight of the acrylic polymer, 0.1 to 20 parts by weight of the silane monomer, and 0.001 to 5 parts by weight of the curing catalyst.

### ADVANTAGEOUS EFFECTS

The primer composition for a glass adhesive according to the present invention does not include a pigment such as carbon black and an inorganic filler, and accordingly, a dispersant may not be included, a dispersion process may be omitted, and economic feasibility may be excellent. Further, the primer composition for a glass adhesive does not induce the precipitation of a pigment and an inorganic filler, and thus has excellent storage stability, is capable of securing a pot time, and has excellent workability. Also, the primer composition for a glass adhesive has excellent adhesiveness and is suitable to use for fixing the glass of a car.

### BEST MODE FOR CARRYING OUT THE INVENTION

Hereinafter, the present invention will be explained in detail.

In the present invention, the "weight average molecular weight" of a resin may be measured by a method well known in the art, and may be represented by, for example, a value measured by a gel permeation chromatography (GPC) method.

In addition, in the present invention, the "glass transition temperature (Tg)" of a resin, or the like may be measured by a method such as a differential scanning calorimetry (DSC) method, a differential thermal analysis (DTA) method, Mechanicla Methods, Volume Methods, or the like, well known in the art, and may be represented by, for example, a value measured by a differential scanning calorimetry (DSC) method.

In addition, in the present disclosure, "(meth)acryl" means "acryl" and/or "methacryl", and "(meth)acrylate" means "acrylate" and/or "methacrylate".

The primer composition for a glass adhesive according to the present invention includes a silane polymer, an acrylic polymer, a silane monomer and a curing catalyst.

### Silane polymer

A silane polymer plays the role of providing a painted film with adhesiveness between a painted surface which is a subject material and glass.

The silane polymer may be prepared from a silane composition including an epoxysilane and an aminosilane. Particularly, the silane polymer may be prepared by reacting a silane composition including an epoxysilane and an aminosilane at 40 to 70°C for 20 to 50 hours.

In this case, the epoxysilane may be, for example, C₁₋₅alkoxyglycidoxyC₁₋₅alkyl silane, particularly, triC₁₋₅alkoxy glycidoxyC₁₋₅alkyl silane. Particularly, the epoxysilane may include trimethoxyglycidoxymethyl silane, trimethoxyglycidoxyethyl silane, trimethoxyglycidoxypropyl silane, triethoxyglycidoxymethyl silane, triethoxyglycidoxyethyl silane, triethoxyglycidoxypropyl silane, tripropoxyglycidoxymethyl silane, tripropoxyglycidoxyethyl silane, tripropoxyglycidoxypropyl silane, or the like, without limitation.

In addition, the aminosilane may be, for example, a silane including one or more amino groups, particularly, a silane including two or more amino groups. Particularly, the aminosilane may be aminoC₁₋₅alkyl-triC₁₋₅alkoxy silane, for example, aminomethyl-trimethoxy-silane, aminoethyl-trimethoxy-silane, aminopropyl-trimethoxy-silane, or the like, without limitation.

The silane composition may include a solvent, and the solvent may include methyl ethyl ketone, ethyl acetate, dimethyl carbonate, n-butanol, or the like. In addition, the silane composition may include 80 wt% or less, or 60 to 80 wt% of the solvent based on the total weight of the composition.

The silane composition may include the epoxysilane and the aminosilane in a weight ratio of 1: 0.1 to 0.9, or 1: 0.3 to 0.7.

In addition, the silane polymer may have an epoxy equivalent of 2,000 to 15,000 g/eq, and a weight average molecular weight (Mw) of 500 to 4,000 g/mol. Particularly, the silane polymer may have an epoxy equivalent of 3,000 to 13,000 g/eq, and a weight average molecular weight (Mw) of 1,000 to 3,000 g/mol. If the epoxy equivalent and the weight average molecular weight of the silane polymer are within the above-described ranges, excellent effects of storability and adhesiveness may be achieved.

The silane polymer may be included in the composition in an amount of 15 to 70 parts by weight, 20 to 60 parts by weight, or 30 to 50 parts by weight based on 1 to 50 parts by weight of an acrylic polymer. If the amount of the silane polymer is in the range, excellent effects of storability and adhesiveness may be achieved.

### Acrylic polymer

An acrylic polymer plays the role of providing the primer composition with painted film-forming properties and adhesiveness.

The acrylic polymer may use a directly synthesized one according to a known method, or may use a commercially available product. In this case, the acrylic polymer may be prepared by, for example, polymerizing an alkyl group-containing (meth)acrylate monomer, and a hydroxyl group- and an aromatic ring-containing (meth)acrylate monomer. Particularly, the acrylic polymer may be prepared by polymerizing a C₁₋₃ alkyl group-containing (meth)acrylate monomer, a C₄₋₁₀ alkyl group-containing (meth)acrylate monomer, and a hydroxyl group- and a C₆₋₁₂ aromatic ring-containing (meth)acrylate monomer. For example, the acrylic polymer may be prepared by polymerizing 5 to 20 parts by weight, or 10 to 15 parts by weight of the C₁₋₃ alkyl group-containing (meth)acrylate monomer, 10 to 20 parts by weight, or 12 to 17 parts by weight of the C₄₋₁₀ alkyl group-containing (meth)acrylate monomer, and 1 to 10 parts by weight, or 2 to 7 parts by weight of the hydroxyl group- and C₆₋₁₂ aromatic ring-containing (meth)acrylate monomer.

More particularly, the acrylic polymer may be prepared by polymerizing the C₁₋₃ alkyl group-containing (meth)acrylate monomer, the C₄₋₇ alkyl group-containing (meth)acrylate monomer, and the hydroxyl group- and C₆₋₁₂ aromatic ring-containing (meth)acrylate monomer at 60 to 100°C for 5 to 20 hours.

In addition, the acrylic polymer may have a weight average molecular weight (Mw) of 150,000 to 250,000 g/mol, a glass transition temperature (Tg) of 30 to 70°C, and a viscosity at 25°C of 200 to 1,500 cps. Particularly, the acrylic polymer may have a weight average molecular weight of 170,000 to 220,000 g/mol, or 180,000 to 200,000 g/mol, a glass transition temperature of 40 to 60°C, or 45 to 55°C, and a viscosity at 25°C of 400 to 1,000 cps, or 600 to 850 cps. If the weight average molecular weight, glass transition temperature and viscosity at 25°C of the acrylic polymer are within the above-described ranges, a painted film may be formed, and effects of excellent adhesiveness and excellent workability may be achieved.

Further, the acrylic polymer may be included in the composition in an amount of 1 to 50 parts by weight, or 6 to 28 parts by weight based on 15 to 70 parts by weight of the silane polymer. If the amount of the acrylic polyol is within the above-described range, effects of excellent adhesiveness and excellent workability may be achieved, and if the amount deviates from the above-described range, a painted film may not be formed.

### Silane monomer

A silane monomer plays the role of improving the adhesiveness of the primer composition.

The silane monomer may be an alkoxy silane monomer. Particularly, the silane monomer may include a first silane monomer containing an amino group and an alkoxy group, and a second silane monomer containing a mercapto group and an alkoxy group. More particularly, the silane monomer includes a first silane monomer containing an amino group and an alkoxy group, and a second silane monomer containing a mercapto group and an alkoxy group, and may include the first silane monomer and the second silane monomer in a weight ratio of 1: 0.1 to 1, or in a weight ratio of 1: 0.5 to 0.8.

In this case, the first silane monomer may include one or more, or two or more amino groups and a C₁₋₅ alkoxy group, or the first silane monomer may include 2 to 4 amino groups and a C₁₋₃ alkoxy group.

In addition, the second silane monomer may include a mercapto group and a C₁₋₅ alkoxy group, or the second silane monomer may include a mercapto group and a C₁₋₃ alkoxy group.

Further, the first silane monomer includes the amino group and has effects of excellent initial adhesiveness with an adhesive, and the second silane monomer includes the mercapto group and has effects of excellent adhesiveness with glass.

The silane monomer may be included in the compound in an amount of 0.1 to 20 parts by weight, or 1.0 to 10 parts by weight based on 15 to 70 parts by weight of the silane polymer. If the amount of the silane monomer is within the above-described monomer, effects of excellent adhesiveness and storage stability may be achieved.

In addition, the above-described silane polymer and silane monomer may be included in the composition in a weight ratio of 1.5 to 10: 1. Particularly, the silane polymer and the silane monomer may be included in the composition in a weight ratio of 4 to 8: 1. If the silane polymer and silane monomer are included in the composition in the weight ratio within the range, excellent effects of adhesiveness may be achieved.

### Curing catalyst

A curing catalyst plays the role of controlling the curability of the primer composition.

The curing catalyst may include, for example, metal salts such as zinc octoate and stannous octoate; urea compounds such as phenyl dimethyl urea and toluene bisdimethylurea; and acid compounds such as sulfuric acid, hydrochloric acid, nitric acid, and phosphoric acid.

In this case, the curing catalyst may be included in the composition in an amount of 0.001 to 5 parts by weight, or 0.01 to 1.0 parts by weight based on 15 to 70 parts by weight of the silane polymer. If the amount of the curing catalyst is within the above-described range, effects of excellent adhesiveness may be achieved.

### Additives

Additives may additionally include one or more additives selected from the group consisting of a storage stabilizer, a solvent and a moisture absorbent.

In this case, the additive may be included in the composition in an amount of 10 to 90 parts by weight based on 15 to 70 parts by weight of the silane polymer. Particularly, the additive may be included in the composition in an amount of 12 to 80 parts by weight, or 14 to 70 parts by weight based on 15 to 70 parts by weight of the silane polymer.

The storage stabilizer plays the role of improving the stability of the primer composition. In this case, the storage stabilizer may use any one that may be added to a common primer composition for glass, without specific limitation, and may include, for example, dialkylmalonic acid including dimethylmalonic acid, diethylmalonic acid, diisopropylmalonic acid, or the like. Further, the storage stabilizer may be included in the composition in an amount of 0.1 to 10 parts by weight, or 0.5 to 5 parts by weight based on 15 to 70 parts by weight of the silane polymer.

The solvent plays the role of controlling the viscosity and dryness of the composition. In this case, the solvent may be any one that may be added to a common primer composition for glass, without specific limitation, and may use, for example, aromatic hydrocarbons such as toluene and xylene, aliphatic hydrocarbons such as hexane, octane and isoparaffin, ketones such as acetone, methyl ethyl ketone and methyl isobutyl ketone, acetates such as ethyl acetate and isobutyl acetate, ethers such as diisopropyl ether and 1,4-dioxane, or carbonates such as dimethyl carbonate and diethyl carbonate. In addition, the solvent may be included in the composition in an amount of 10 to 60 parts by weight, or 20 to 50 parts by weight based on 15 to 70 parts by weight of the silane polymer.

In addition, the primer composition may not include a pigment and a dispersant. The primer composition for a glass adhesive according to the present invention, as described above does not include a pigment such as carbon black and an inorganic filler, and may not include a dispersant, and accordingly, may omit a dispersion process, thereby achieving excellent economic feasibility. In addition, the primer composition for a glass adhesive may not induce the precipitation of a pigment and an inorganic filler, and has excellent storage stability, secure a pot time, and has excellent workability. In addition, the primer composition for a glass adhesive has excellent adhesiveness with glass, and is suitably used for fixing the glass of a car.

### MODE FOR CARRYING OUT THE INVENTION

Hereinafter, the present invention will be explained more particularly referring to embodiments. However, the embodiments are only for assisting the understanding of the present invention, and the scope of the present invention is not limited to the embodiments in any sense.

### Synthetic Example 1. Preparation of silane polymer

To a reaction vessel, 100 parts by weight of N-(beta-aminoethyl)-gamma-aminopropyl-trimethoxy-silane, 230 parts by weight of gamma-glycidoxypropyltrimethoxy-silane, 215 parts by weight of methyl ethyl ketone, 430 parts by weight of dimethyl carbonate and 30 parts by weight of n-butanol were added and reacted at 60°C for 48 hours to prepare a silane polymer.

The silane polymer thus prepared showed an epoxy equivalent of 3,500 g/eq, and a weight average molecular weight of 2,500 g/mol.

### Synthetic Example 2. Preparation of silane polymer

To a reaction vessel, 600 parts by weight of methyl ethyl ketone, 130 parts by weight of methyl methacrylate, 150 parts by weight of butyl methacrylate, 55 parts by weight of 2-hydroxy-3-phenoxypropylacrylate and 5 parts by weight of tert-butyl peroxide were added and reacted at 80°C for 12 hours to prepare an acrylic polymer.

The acrylic polymer thus prepared showed a weight average molecular weight of 200,000 g/mol, a glass transition temperature of 48.1°C, and a viscosity at 25°C of 800 cps.

### Example 1. Preparation of primer composition

To a reaction vessel, 39 parts by weight of the silane polymer of Synthetic Example 1, 16 parts by weight of the acrylic polymer of Synthetic Example 2, 3.5 parts by weight of a silane monomer-1, 2.5 parts by weight of a silane monomer-2, 0.05 parts by weight of a curing catalyst, 2.3 parts by weight of a storage stabilizer, 18.65 parts by weight of a solvent-1, and 18 parts by weight of a solvent-2 were added and stirred at 600 rpm for 20 minutes using a high-speed agitator to prepare a primer composition.

### Examples 2 to 11 and Comparative Examples 1 to 8.

Primer compositions were prepared by the same method as in Example 1 except for using the amounts of the components, described in Tables 1 to 3.

**[Table 1]**

| Component (parts by weight) | Example 1 | Example 2 | Example 3 | Example 4 | Example 5 | Example 6 |
|---|---|---|---|---|---|---|
| Silane polymer | 39 | 30 | 50 | 39 | 39 | 39 |
| Acrylic polymer | 16 | 15 | 15 | 5 | 35 | 15 |
| Silane monomer-1 | 3.5 | 3 | 7 | 3 | 3 | 3 |
| Silane monomer-2 | 2.5 | 2 | 5 | 2 | 2 | 2.7 |
| Curing catalyst | 0.05 | 0.05 | 0.05 | 0.05 | 0.05 | 0.05 |
| Storage stabilizer | 2.3 | 1.3 | 1 | 2.3 | 0.95 | 1.3 |
| Solvent-1 | 18.65 | 27 | 10 | 25 | 10 | 20 |
| Solvent-2 | 18 | 21.65 | 11.95 | 23.65 | 10 | 18.95 |
| Total | 100 | 100 | 100 | 100 | 100 | 100 |

**[Table 2]**

| Component (parts by weight) | Example 7 | Example 8 | Example 9 | Example 10 | Example 11 |
|---|---|---|---|---|---|
| Silane polymer | 50 | 26.05 | 27 | 60 | 30 |
| Acrylic polymer | 15 | 15 | 30 | 8 | 15 |
| Silane monomer-1 | 3.5 | 4.3 | 3.5 | 5 | 2 |
| Silane | 2 | 3.3 | 2 | 4 | 3 |
| monomer-2 | | | | | |
| Curing catalyst | 0.05 | 0.05 | 0.05 | 0.05 | 0.05 |
| Storage stabilizer | 1.3 | 1.3 | 1.3 | 1.3 | 1.3 |
| Solvent-1 | 15 | 25 | 18.15 | 10 | 27 |
| Solvent-2 | 13.15 | 25 | 18 | 11.65 | 21.65 |
| Total | 100 | 100 | 100 | 100 | 100 |

**[Table 3]**

| Component (parts by weight) | Comp. Examp le 1 | Comp. Examp le 2 | Comp. Examp le 3 | Comp. Examp le 4 | Comp. Examp le 5 | Comp. Examp le 6 | Comp. Examp le 7 | Comp. Examp le 8 |
|---|---|---|---|---|---|---|---|---|
| Silane polymer | 40 | - | 49.8 | 13 | 72 | 39 | 50 | 20 |
| Acrylic polymer | 15.65 | 45.6 | - | 28 | 6.15 | 10 | 0.5 | 55 |
| Silane monomer-1 | - | 3 | 3 | 4.3 | 6.5 | 13 | 5 | 2.5 |
| Silane monomer-2 | - | 2 | 2 | 3.3 | 4 | 10 | 4 | 1.5 |
| Curing catalyst | 0.05 | 0.05 | 0.05 | 0.05 | 0.05 | 0.05 | 0.05 | 0.05 |
| Storage stabilizer | 1.3 | 1.3 | 1.3 | 2.35 | 1.3 | 1.3 | 1.3 | 1.3 |
| Solvent-1 | 24 | 29 | 24.8 | 25 | 5 | 15 | 21.15 | 10 |
| Solvent-2 | 19 | 19.05 | 19.05 | 24 | 5 | 11.65 | 18 | 9.65 |
| Total | 100 | 100 | 100 | 100 | 100 | 100 | 100 | 100 |

In Table 4 below, the manufacturers and product names of the components used in each of the Comparative Examples and Examples are shown.

**[Table 4]**

| Component | Compound name |
|---|---|
| Silane monomer-1 | N-(Beta-aminoethyl)-gamma-aminopropyl-trimethoxy-silane |
| Silane monomer-2 | (3-Mercaptopropyl)trimethoxysilane |
| Curing catalyst | Stannous octoate |
| Storage stabilizer | Diethyl malonate |
| Solvent-1 | Ethyl acetate |
| Solvent-2 | Diethyl carbonate |

### Experimental Examples: Evaluation of physical properties

Specimens were manufactured using the primer compositions of the Examples and Comparative Examples based on HMC Standards (MS715-25), the physical properties were measured by the methods below, and the results are shown in Table 5 below.

### (1) Adhesiveness

The composition was applied on a painted surface to 120 mm (length) × 10 mm (width) × 5 mm (thickness) and cured under the conditions of 20°C and a relative humidity of 65% for 7 days to form a primer layer. Then, one end of the primer layer of the specimen was cut with a knife with 15 mm, and the substrate of painting was hold with one hand and peeled at an angle of 30° using the knife. Then, the adhesiveness after curing was evaluated by calculating the area of an adhesive without adhesion with the primer (interface peeling between the primer layer and the adhesive) to the total area of the adhesive layer by %. In this case, the adhesiveness was assessed for good with the increase of the area adhered.

### (2) Storability

After measuring a viscosity at 20°C with a Ford cup #4 and storing at 40°C for 10 days, a viscosity was measured again. Then, a viscosity change rate (%) was calculated based on the initial viscosity, and evaluation standards are as follows. Evaluation was given excellent if the viscosity change rate (%) was less than 20%, common if 20 to 30%, and inferior if greater than 30%.

### (3) Pot time

After applying, the composition was stood under the conditions of 20°C and a relative humidity of 65% for 7 days for curing, and an adhesive [manufacturer: KCC, product name: PU9370-BTX] was applied to a thickness of 5 mm to manufacture a specimen. Then, a time for inducing interface peeling between the primer layer and the adhesive layer was measured.

### (4) Shear strength

The composition was applied and cured under the conditions of 20°C and a relative humidity of 65% for 7 days, and a specimen with a dog bone shape having a thickness of 5 mm was manufactured. The shear strength was measured using a Universal Testing Machine (UTM).

**[Table 5]**

| | Adhesive ness | Storabilit y | Pot time | Shear strength (MPa) |
|---|---|---|---|---|
| Example 1 | 100% | Excellent | 3 months | 5.6 |
| Example 2 | 100% | Excellent | 3 months | 5.3 |
| Example 3 | 100% | Common | 3 months | 5.5 |
| Example 4 | 95% | Common | 3 months | 5.3 |
| Example 5 | 90% | Common | 1.5 months | 5.1 |
| Example 6 | 100% | Excellent | 3 months | 5.0 |
| Example 7 | 95% | Common | 2 months | 5.3 |
| Example 8 | 95% | Excellent | 2 months | 4.7 |
| Example 9 | 90% | Excellent | 2 months | 4.2 |
| Example 10 | 90% | Common | 1.5 months | 4.6 |
| Example 11 | 90% | Common | 1 month | 4.0 |
| Comparative Example 1 | 80% | Excellent | 1 month | 3.0 |
| Comparative Example 2 | 40% | Excellent | 24 hours | 2.8 |
| Comparative Example 3 | 50% | Excellent | 24 hours | 3.5 |
| Comparative Example 4 | 40% | Excellent | 24 hours | 2.7 |
| Comparative Example 5 | 100% | Inferior | 1 month | 4.8 |
| Comparative Example 6 | 100% | Inferior | 1 month | 4.9 |
| Comparative Example 7 | 70% | Inferior | 1 month | 5.1 |
| Comparative Example 8 | 70% | Excellent | 1 month | 4.9 |

As shown in Table 5, all the compositions of Examples 1 to 11 showed excellent adhesiveness, storability, pot life and shear strength.

On the contrary, Comparative Example 1, not including a silane monomer, Comparative Example 2, not including a silane polymer, and Comparative Example 3, not including an acrylic polymer showed insufficient adhesiveness, pot time and shear strength.

In addition, Comparative Example 4, including a small amount of a silane polymer showed insufficient adhesiveness, pot time and shear strength.

In addition, Comparative Example 5 including an excessive amount of a silane polymer, Comparative Example 6 including an excessive amount of a silane monomer, and Comparative Example 7 including a small amount of an acrylic polymer showed insufficient pot time.

In addition, Comparative Example 8 including an excessive amount of an acrylic polymer showed insufficient pot time.

## Claims

1. A primer composition for a glass adhesive, comprising a silane polymer, an acrylic polymer, a silane monomer and a curing catalyst, wherein
the composition comprises 15 to 70 parts by weight of the silane polymer, 1 to 50 parts by weight of the acrylic polymer, 0.1 to 20 parts by weight of the silane monomer, and 0.001 to 5 parts by weight of the curing catalyst.

2. The primer composition for a glass adhesive according to claim 1, wherein the silane polymer and the silane monomer are comprised in a weight ratio of 1.5 to 10: 1.

3. The primer composition for a glass adhesive according to claim 1, wherein the silane polymer has an epoxy equivalent of 2,000 to 15,000 g/eq, and a weight average molecular weight of 500 to 4,000 g/mol.

4. The primer composition for a glass adhesive according to claim 1, wherein the acrylic polymer has a weight average molecular weight of 150,000 to 250,000 g/mol, and a glass transition temperature of 30 to 70°C.

5. The primer composition for a glass adhesive according to claim 1, wherein the silane monomer comprises a first silane monomer containing an amino group and an alkoxy group, and a second silane monomer containing a mercapto group and an alkoxy group.

6. The primer composition for a glass adhesive according to claim 5, comprising the first silane monomer and the second silane monomer in a weight ratio of 1: 0.1 to 1.

7. The primer composition for a glass adhesive according to claim 1, wherein the composition does not comprise a pigment and a dispersant.
